(19)

Europäisches
Patentamt
European
Patent Office
Office européen
des brevets

(11) **EP 2 336 887 A1**

(12) **EUROPEAN PATENT APPLICATION**
published in accordance with Art. 153(4) EPC

(43) Date of publication:
**22.06.2011 Bulletin 2011/25**

(21) Application number: **08808474.4**

(22) Date of filing: **12.09.2008**

(51) Int Cl.:
***G06F 11/00*** (2006.01)

(86) International application number:
**PCT/JP2008/002533**

(87) International publication number:
**WO 2010/029602 (18.03.2010 Gazette 2010/11)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Fujitsu Limited
Kawasaki-shi, Kanagawa 211-8588 (JP)**

(72) Inventor: **KODAKA, Nobuko
Kawasaki-shi
Kanagawa 211-8588 (JP)**

(74) Representative: **Holz, Ulrike
Haseltine Lake LLP
Lincoln House, 5th Floor
300 High Holborn
London WC1V 7JH (GB)**

(54) **SOFTWARE PATCH APPLICATION METHOD, PROGRAM, AND DEVICE**

(57)     In order to minimize the time during which the computer system is stopped for patch application, an application patch extraction process comparing latest patch information and applied patch information to extract unapplied patches and to extract, among the unapplied patches, application patches whose application target is installed software; a applicable-patch-during-operation-continuation extraction process extracting, among the application patches, applicable-patches-during-operation-continuation that do not have at least user asset destruction possibility or incompatibility possibility; a patch application schedule generation process generating a patch application schedule to apply the applicable-patches-during-operation-continuation during a time zone in which software being the application target of the applicable-patches-during-operation-continuation is not executed; and a patch application process applying the applicable-patches-during-operation-continuation to software being the application target, according to the patch application schedule while the operation in continued are executed.

FIG. 1

**Description**

FIELD

The present invention relates to a patch application method to modify/change a part or the entirety of software that runs in an information processing apparatus and the like.

BACKGROUND

Conventionally, in the application process of a program or data (hereinafter, referred to as a "patch") to modify/change a part or the entirety of software, patches that are applicable to the computer system is extracted according to information of the computer system to be the application target of the patches and the latest patch information (information of the version number, type and the like of the patch). Then, the extracted patches are applied while shutting down the computer system once, and the system is booted after the application of the patches is completed.

However, there are many cases where the computer system cannot be shut down frequently, due to operational reasons. For this reason, rolling update, a technique to apply a patch by remote control to an alternative boot environment (hereinafter, referred to as "remote patch application"), and the like have been developed. In addition, depending on conditions, there are some cases where it is possible to apply a patch maintaining a multi-user mode without shutting down the computer system. Here, rolling update refers to a method of performing, in a case in which a computer system consists of a cluster and the like having a plurality of nodes, software update without stopping operations running on the computer system, by applying the patches to the nodes constituting the cluster one by one. However, rolling update and remote patch application are costly as rolling update requires a cluster configuration and remote patch application requires an alternative boot environment for the disk. In addition, while there are patches that can be applied in a multi-user mode, depending the timing of applying the patch, the operation may be affected, generating a significant risk associated with the application of the patch.

In relation to the techniques described above, a maintenance system has been known in which patch data that is executable and that is not executable during user operation are distinguished, and the patch data that is executable during user operation is applied during user operation, and patch data that is not executable during user operation is applied while halting user operation.

Meanwhile, a patch application system in which the patch processing is performed without shutting down the entirety of the computer system by monitoring the operation status of each computer constituting the computer system and selecting the time zone with the smallest load to determine the patch application schedule time.

Meanwhile, a software management apparatus has been known that obtains the operation status of an embedded device, calculates a suitable time zone for updating software operating in the embedded device according to its load status, and executes software update in the time zone.

[Patent Document 1] Japanese Laid-open Patent Publication No. H01-220031

[Patent Document 2] Japanese Laid-open Patent Publication No. 2003-015894

[Patent Document 3] Japanese Laid-open Patent Publication No. 2004-206390

SUMMARY

The present invention has been made in view of the problem described above, and its challenge to be solved is to provide a patch application method that minimizes the amount of time during which the computer system is stopped for patch application.

The patch application method executes

a step of comparing latest patch information indicating software being a patch application target stored in a latest patch information storage unit and applied patch information indicating an applied patch that has already been applied to software stored in an applied patch information storage unit, to specify unapplied patches to the patch application target software, as well as to specify, according to information of installed software stored in an install information storage unit, patches planned to be applied whose application target is installed software, among the unapplied patches to the patch application target software;

a step of specifying, among the specified patches planned to be applied, parches that do not have at least a user asset destruction possibility being a possibility to destroy user asset or an incompatibility possibility indicating a possibility that incompatibility occurs with other software to which a patch is not applied, as applicable patches;

a step of reading out, from a software execution schedule storage unit storing an execution schedule for each of the software, the execution schedule to calculate a time zone in which software being an application target of the applicable patches is not executed and generating a patch application schedule to apply the applicable patches to software in a time zone; and

a step of applying the applicable patches to software according to the patch application schedule.

According to the patch application method, patches to be applied whose application target is installed software are extracted, and among the extracted patches, patches that do not have at least user asset destruction possibility or incompatibility possibility are extracted as applicable patches.

Then, a patch application schedule is generated so that the applicable patches are applied during a time zone in which the software being the application target of the applicable patches is not executed. Then, a patch application process is performed according to the patch application schedule.

Therefore, patches that are applicable while the computer system is running can all be applied while the computer system is operating. As a result, only patches that cannot be applied without stopping the computer system are applied while stopping the computer system.

As described above, according to the patch application method, the time during which the computer system is stopped for patch application can be minimized.

BRIEF DESCRIPTION OF DRAWINGS

FIG. 1 is a diagram illustrating a configuration example of the entirety of the system that realizes the patch application method according to the embodiment.
FIG. 2 is a diagram presenting a configuration example of a latest patch information storage unit according to the embodiment.
FIG. 3 is a diagram presenting a configuration example of a software execution schedule storage unit according to the embodiment.
FIG. 4 is a diagram illustrating a software execution schedule according to the embodiment.
FIG. 5 is a diagram presenting a configuration example of a hardware information storage unit according to the embodiment.
FIG. 6 is a flowchart presenting a process of a patch application system according to the embodiment.
FIG. 7 is a flowchart presenting a generation process of a patch application schedule according to the embodiment.
FIG. 8 is a flowchart presenting an application process of a patch according to the embodiment.
FIG. 9 is a flowchart presenting a process at a time of application start-up according to the embodiment.

DESCRIPTION OF EMBODIMENTS

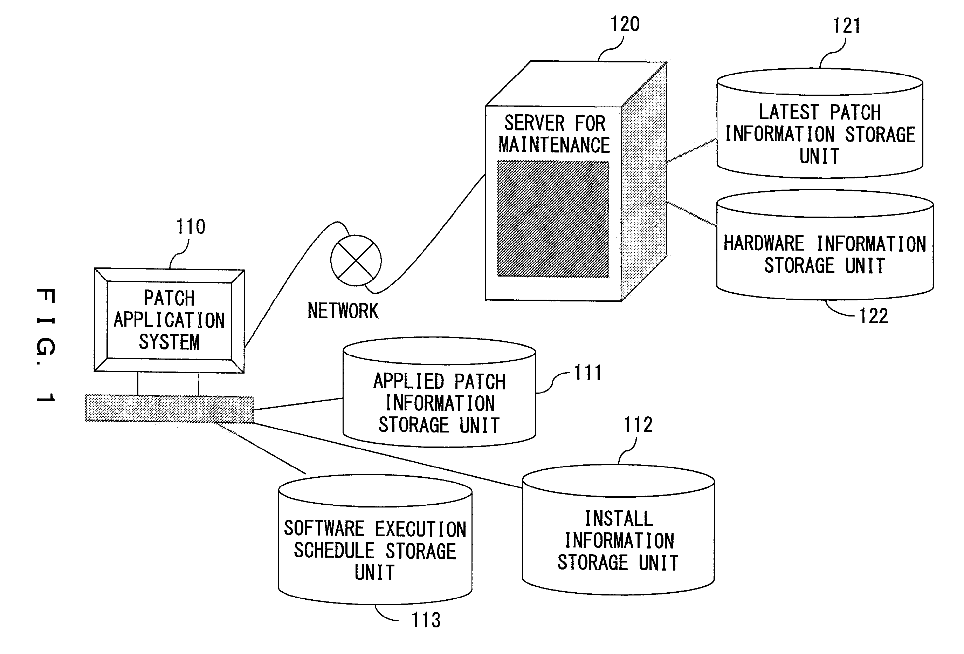

Hereinafter, the present embodiment is described based on FIG.1-FIG.9.
FIG. 1 is a diagram illustrating a configuration example of the entirety of the system that realizes the patch application method according to this example.
The system presented in FIG. 1 has a patch application system 110 that applies a patch to software installed in itself according the patch application method according to the present example and a server for maintenance 120 that manages information related to the latest patch and the like. Hereinafter, information related to the latest patch is referred to as "latest patch information".
The patch application system 110 is an information processing apparatus in which various software are installed. Therefore, the patch application system 110 executes a given operation by executing the installed various software.
In addition, the patch application system 110 has an applied patch information storage unit 111 that stores information of a patch that has already been applied to the patch application system 110, an install information storage unit 112 that stores information of a PKG (Package: software package) that has already been installed in the patch application system 110, and a software execution schedule storage unit 113 that stores the execution schedule of each software. Meanwhile, hereinafter, a patch that has already been applied to the patch application system 110 is referred to an "applied patch".
In addition, the server for maintenance 120 has a latest patch storage unit 121 that stores latest patch information, and a hardware information storage unit 122 that stores information of hardware used for execution of software.
Meanwhile, the patch application system 110 may be an independent information processing apparatus that applies a patch to software installed in another information processing apparatus. In addition, the patch application system 110 may be realized by making a CPU being an operation processing apparatus provided in an information processing apparatus execute a predetermined program order. In this case, the program may be stored in a storage medium (such as a volatile memory, a non-volatile memory, a magnetic disk device, portable storage media such as a CD and DVD), and the program may be executed by making the information processing apparatus read out the program from the storage medium.

In addition, the storage units described above may be configured as respectively independent storage apparatuses, or may be configured as a single storage apparatus. In FIG. 1, the patch application system 110 and the server for maintenance 120 are communicatively connected via a network or a dedicated line.

The applied patch information stored in the applied patch information storage unit 111 consists of the patch ID of a patch that has already been applied, the patch ID of a patch related to the patch, and the PKG name of a PKG modified by the patch, and the like.

The install information stored in the install information storage unit 112 consists of the PKG name of a PKG that has already been installed, the version number of the PKG, and the like.

The software execution schedule stored in the software execution schedule storage unit 113 consists of the software name of a schedule of software that is executed regularly, or, for a certain times in a given time zone, the type of the job, the scheduled execution time, and the like.

The latest patch information stored in the latest patch information storage unit 121 consists of the patch ID of the latest patch, the product name to which the patch is to be applied, the PKG name of a PKG modified by the patch application, presence/absence of the possibility that a issue of incompatibility occurs with other software due to patch application, presence/absence of the possibility of destroying user asset such as user setting information by resetting and the like, the time to be a reference for calculating the time required for patch application, and the like.

Meanwhile, the possibility that an issue of incompatibility occurs with other software due to the patch application is referred to as "compatibility possibility". For example, for software that has a new version number due to the patch application, there is the possibility that an issue of incompatibility occurs with other software to which the patch is not applied, which is referred to as "Backward Compatibility". In addition, the possibility of destroying user asset such as user setting information by resetting and the like is referred to as "user asset destruction possibility". In addition, the time to be a reference for calculating the time required for patch application is referred to as "patch application reference time".

The hardware information stored in the hardware information storage unit 122 consists of the model name of the model constituting the patch application system 110, the CPU type of the mounted CPU, the mounted memory, the CPU stop/run time (seconds) at the time of patch application, the application prediction coefficient used for adjusting the time required for patch application according to the hardware configuration.

For example, when the patch application system 110 requests latest patch information from the server for maintenance 120, the server for maintenance 120 obtains the latest patch information from the latest patch information storage unit 121, and performs notification of it to the patch application system 110. In the similar manner, the server for maintenance 120 performs notification of the hardware information to the patch application system 110 in response to the patch application system 110.

In addition, the patch application system 110 obtains the applied patch information from the applied patch information storage unit 111. Then, the patch application system 110 compares the latest patch information and the applied patch information, and extracts patches that have not been applied to the patch application system 110 from the comparison result.

Furthermore, the patch application system 110 obtains, from the install information storage unit 112, information of the PKG installed in the patch application system 110 itself, and extracts, among extracted patches that have not been applied, the information of patches to be applied to the installed PKG. Furthermore, the patch application system 110 extracts, from the extracted information of the patches, information of patches other than the patches for OS (Operating System) and drivers. Meanwhile, information of the PKG installed in the patch application system 110 itself is referred to as "install information".

Hereinafter, in this example, higher-level software (including middleware and the like) other than the OS and the OS that operates on the kernel and drivers are referred to simply as application.

Then, the patch application system 110 refers to the latest patch information, and checks presence/absence of the user asset destruction possibility and the incompatibility possibility included in the latest patch information for every application patch. Then, the patch application system 110 extracts, among application patches, information of patches that do not have the possibility of user asset destruction and the possibility of incompatibility. In this example, the extracted information of the patches is regarded as information of patches that are applicable to the patch application system 110 while during operation continuation. Hereinafter, the extracted information of the patches is referred to as "applicable-patch-information-during-operation-continuation ". In addition, a patch registered in the applicable-patch-information-during-operation-continuation is referred to as an "applicable-patch-during-operation-continuation".

Then, the patch application system 110 obtains, from the software execution schedule storage unit 113, the execution schedule of an application of the PKG installed in the patch application system 110 itself. Then, the patch application system 110 calculates the time in which the application being the application target for each applicable-patch-during-operation-continuation, and generates a schedule for applying the patch to software. Meanwhile, the PKG installed in the patch application system 110 itself is referred to as "software" according to circumstances. In addition, the schedule for applying a patch to software is referred to as a "patch application schedule".

Then, the patch application system 110 applies an applicable-patch-during-operation-continuation while the operation is continued according to the patch application schedule. Meanwhile, the application process of the patch is performed according to a dedicated process that runs on the patch application system 110. Hereinafter, this process is referred to as a "patch application process".

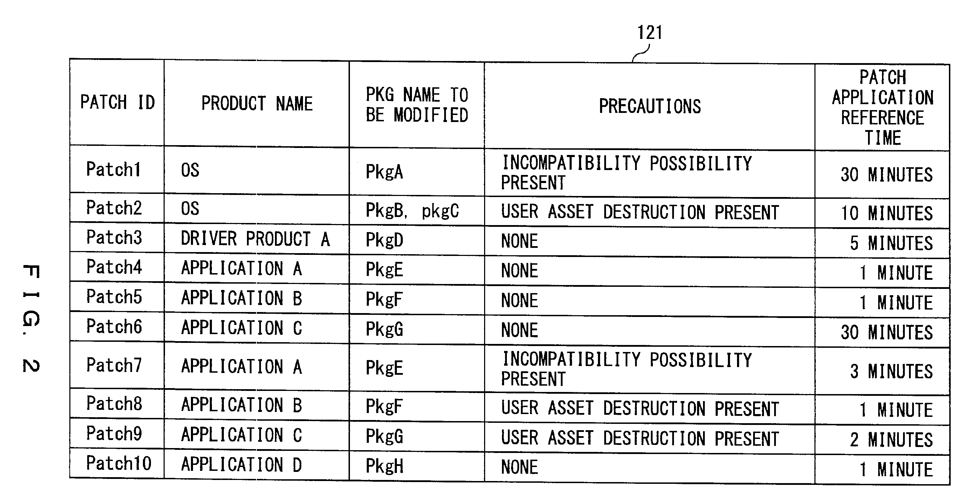

FIG. 2 is a diagram presenting a configuration example of the latest patch information storage unit 121 according to the embodiment.

As described above, the latest patch information stored in the latest patch information storage unit 121 consists of the patch ID of the latest patch, the product name to which the patch is to be applied, the PKG name of a PKG modified by the patch application, precautions indicating presence/absence of the incompatibility possibility and presence/absence of the user asset destruction possibility due to patch application, and the patch application reference time.

The latest patch information is updated as needed when a need to modify/change a part or the entirety of given software arises.

For example, in a case in which Patch1 and Patch2 have been applied and driver product A is not installed, and applications A-D are installed, Patch4-Patch10 are unapplied patch. In addition, in this case, patches that do not have the possibility for user asset destruction and the possibility for incompatibility are patche4-patch6 and Patch 10.

Here, for the patch application reference time, a value measured at the time a test for patch application was performed in advance using a test machine and the like is used. In this example, time y1 that is predicted as the time required for applying a patch for each system being the application target is calculated according to the following calculation formula. Meanwhile, the time y1 predicted as the time required for patch application is referred to as the "patch application predicted time".

$$y1 = a \times x \qquad \qquad \ldots (1)$$

Here, a is the application prediction coefficient for the system stored in the hardware information storage unit 122, and x is the patch application reference time stored in the latest patch information storage unit 121.

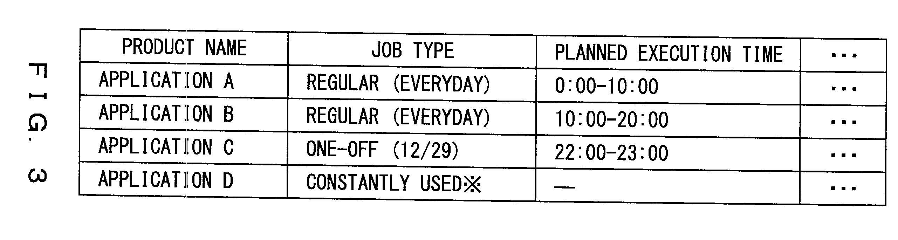

FIG. 3 is a diagram presenting a configuration example of the software execution schedule storage unit 113 according to the present embodiment.

As described above, the software execution schedule stored in the software execution schedule storage unit 113 consists of, at least, the product name of software to be executed, the type of the job of the software, and its scheduled execution time. Meanwhile, in this example, when "-" is set for the "SCHEDULED APPLICATION TIME", patch application is not performed for the software under any circumstance.

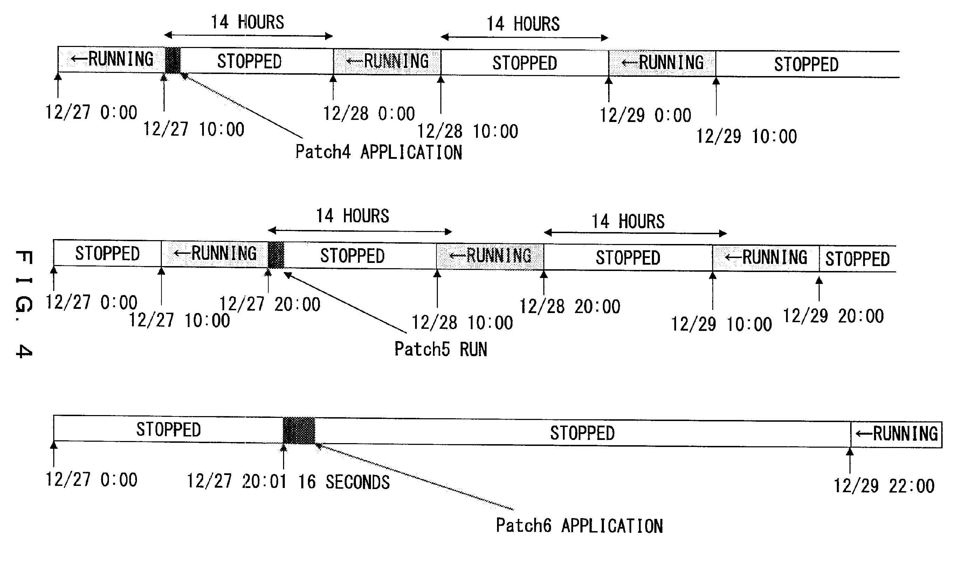

FIG. 4 is a diagram illustrating the software execution schedule according to the present embodiment. Meanwhile, FIG. 4 presents software execution schedules related to the applications A, B and C presented in FIG. 3. A case in which the current time is 0:00 of 27 December is presented.

According to the schedule for the application A, the application A is executed for ten hours from 0:00 to 10:00 at 14-hour intervals. In addition, according to the schedule for the application B, the application B is executed for ten hours from 10:00 to 20:00 at 14-hour intervals. According to the schedule for the application C, the application C is executed for only an hour from 22:00 to 23:00 of 29 December.

Therefore, for example, a schedule for patch application can be generated in which the application process of Patch4 for the application A is started from 10:00 of 27 December, the application process of Patch5 for the application B is started from 20: 00 of 27 December, and the application process of Patch6 for the application C is started from 0: 00 of 28 December.

Meanwhile, the patch application system 110 calculates the patch application actual time required for applying a patch to each application according to the formula (1) described above and formula (2) described later. Then, the patch application system 110 generates the schedule for patch application so that the application process of the patch is completed in a time zone other than the execution time for each application defined by the software execution schedule. Hereinafter, the time zone during rest presented in FIG. 4, that is, the time zone other than the execution time for each application is referred to as a "patch applicable time zone".

For example, in the case of the patch Patch4 for the application A, the patch application system 110 generates a patch application schedule so that the application process of the patch for the application A is completed within 14 hours from 10:00 of 27 December to 0:00 of 28 December.

Meanwhile, if there are a plurality of patches to be applied to each application and the application being the patch application target cannot complete the application process of all the patches within the patch applicable time period (14 hours), the patches for the application being the patch application target may be divided into a plurality of groups, and a patch application schedule may be generated a plurality of separate times for the respective groups.

For example, if there are not only Patch4 but also a plurality of patches for the application A and the application process for all the patches for cannot be completed within the patch applicable time zone (14 hours) for the application A, a patch application schedule may be generated in which the number of patches that can be applied within the 14 hours from 10:00 of 27 December to 0:00 of 28 December are applied in the time zone from 10:00 of 27 December to 0:00 of 28 December, and the rest of the patches are applied during the 14 hours from 10:00 of 28 December to 0:00 of 29 December.

In addition, since "-" is set for the application D in the software execution schedule present in FIG. 3, the patch application system 110 does not perform the application process of a patch for the application D. That is, the patch application system 110 does not generate any patch application schedule related to the application D.

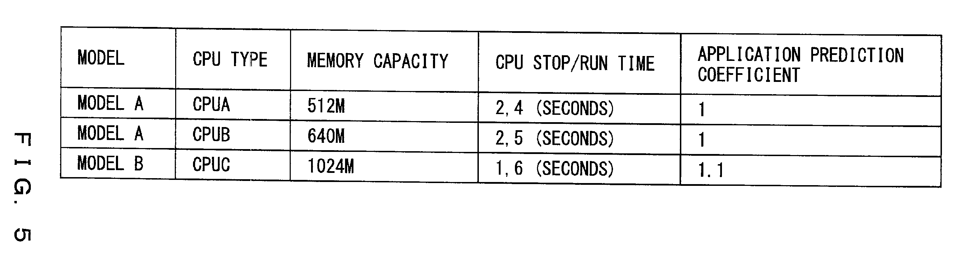

FIG. 5 is a diagram presenting a configuration example of the hardware information storage unit 122 according to the present embodiment.

As described above, the hardware information stored in the hardware information storage unit 122 consists of the model name of the model constituting the patch application system 110, the CPU type of the mounted CPU, the memory capacity of the mounted memory, the CPU stop/run time (seconds) at the time of patch application, and the application prediction coefficient used for adjusting the time required for patch application according to hardware configuration.

The hardware information is updated at timing such as when a new model is released, for example.

For the stop/run time, a time that is estimated as optimal is set according to the load status at the time of patch application for each model. For example, it is presented that for model A, patch application is performed by repeating 2-second stop and 4-second execution of CPUA.

In the hardware information presented in FIG. 5, for the patch application system 110, the CPU stop/run time is defined as 1 second and 6 seconds, respectively, for the case in which the model is model B, the CPU type is CPUC, the memory capacity is memory 1024M bytes. That is, 1-second stop and 6-second execution of the patch application process executing the patch application process are repeated.

In the case of applying the patch Patch4 to the application A installed in the patch application system 110, the patch application predicted time is, using the formula (1), 66 seconds (=1.1×60 seconds).

Here, since the patch application process repeats 1-second stop and 6-second execution, it follows that the 6-second execution of the patch process is performed for 11 times (=66/6) and 1-second stop of the patch application process is performed for 10 times (=66/6-1).

Therefore, the time from the start to the end of the patch application process, that is, the time from the start to the completion of the patch application process is 76 seconds (=6×11+1×10). Thus, the actual time required for patch application calculated from the patch application predicted time and the hardware information (CPU stop/run time) is referred to as the "patch application actual time".

As described above, patch application actual time y2 is

$$y2 = trun \times p + tstop \times (p-1) \qquad \dots (2)$$

$$p = y1/trun$$

Here, tstop and trun are the CPU stop time and the CPU run time, respectively, defined in the hardware information, and p is the number (a natural number after rounding up) of time to execute the patch application process for trun seconds.

In the case of applying a plurality of patches P1, P2, ..., Pn to the same application, the patch application system 110 calculates patch application actual times y2(t1), y2(t2), ..., y2(tn) for each patch.

Then, the patch application system 110 compares the patch application actual times y2(t1), y2(t2), ..., y2 (tn) with patch applicable time zone T1 while summing up them, to obtain patches that can be applied within the patch applicable time zone T1. Then, the patch application system 110 generates a patch application schedule so that the patch application process is performed in the time zone T1 for the obtained patches.

In the similar manner, the patch application system 110 obtains, for the rest of the patches, patches that can be applied within patch applicable time zone T2, and generates a patch application schedule so that the patch application process is performed in the time zone T2. Furthermore, if there are still patches to be applied, in the similar manner, a patch application schedule is generated so that the patch application process is applied in patch applicable time zones T3, T4, ..., Tn.

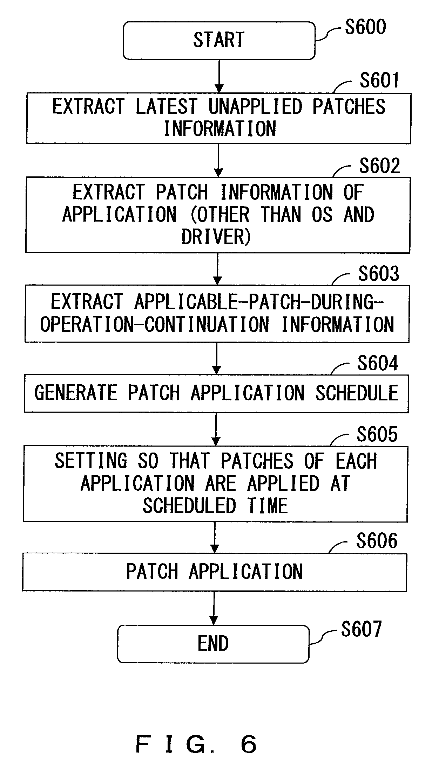

FIG. 6 is a flowchart presenting the process in the patch application system 110 according to the present embodiment.

In step S600, when the user executes a command using input means provided in the patch application system 110, the patch application system 110 moves to step S601. Then, the patch application system 110 starts the patch application process.

In step S601, the patch application system 110 obtains information of unapplied patches to the patch application system 110 from the latest patch information.

At this time, the patch application system 110 requests the latest patch information from the server for maintenance 120. Then, the server for maintenance 120 obtains the latest patch information from the latest patch information storage unit 121. Then, the server for maintenance 120 performs notification of the latest patch information to the patch application system 110.

In addition, the patch application system 110 obtains the applied patch information from the applied patch information storage unit 111. Then, the patch application system 110 compares the patch ID in the latest patch information and the patch ID in the applied patch information. Then, the patch application system 110 extracts, from the latest patch information, information of a patch whose patch ID does not overlap, as information of an unapplied patch to the patch application system 110. Hereinafter, the extracted information of the patch is referred to "unapplied patch information".

Furthermore, the patch application system 110 obtains the install information from the install information storage unit 112. Then, the patch application system 110 compares the PKG name in the unapplied patch information and the PKG name in the install information, Then, the patch application system 110 extracts, from the unapplied patch information, information of a patch whose PKG name matches, as information of a patch to be applied to the PKG installed in the patch application system 110.

In step S602, the patch application system 110 refers to the product name of the information of the patch extracted in step S601, and extracts, from the information of the patch extracted in step S601, only information of the patch for the application installed in the patch application system 110. That is, the patch application system 110 refers to the product name of the information of the patch extracted in step S601, and extracts, from the information of the patch extracted in step S601, information of a patch other than patches for the OS and a driver.

In step S603, the patch application system 110 refers to precautions in the information of the patch extracted in step S602, and extracts, from the information of the patch extracted in step S602, information of a patch that does not have the user asset destruction possibility and the incompatibility possibility, that is, the applicable-patch-information-during-operation-continuation.

In step S604, the patch application system 110 generates a patch application schedule to apply the patch in the applicable-patch-information-during-operation-continuation extracted in step S603 to the patch application system 110.

At this time, the patch application system 110 obtains the software execution schedule from the software execution schedule storage unit 113. In addition, the patch application system 110 requires the hardware information from the server for maintenance 120. Then, the server for maintenance 120 obtains the hardware information from the hardware information storage unit 122 and performs notification of it to the patch application system 110.

Then, the patch application system 110 refers to the software execution schedule, and generates a patch application schedule to apply the applicable-patch-during-operation-continuation to the patch application system 110 using the time zone in which the application is not running. Specifically, the patch application system 110 generates a schedule table described later.

In step S605, the patch application system 110 performs setting so that the applicable-patch-during-operation-continuation is executed at a predetermined time, according to the patch application schedule, for each application being the patch application target.

At this time, the patch application system 110 perform setting so that the applicable-patch-during-operation-continuation is executed at a predetermined time, according to the schedule table generated in S604, for each application being the patch application target, using the automatic running function for a patch application process provided in the patch application system 110, such as at command being a standard feature of Solaris (registered trademark) that is a type of UNIX (registered trademark) based commercial operation systems, and cron command being a standard feature in general of UNIX (registered trademark) based operation systems.

In step S606, the patch application system 110 activates the patch application process when the time set in step S605 comes. The patch application process applies the applicable-patch-during-operation-continuation being set for the set application. When the patch application for all the applicable-patches-during-operation-continuation set in step S605 is completed, the patch application system 110 moves the process to step S607, and terminates the patch application process.

Meanwhile, for the patch application process, a patch application tool and the like that is a standard feature of the OS and the like or is generally provided may be used.

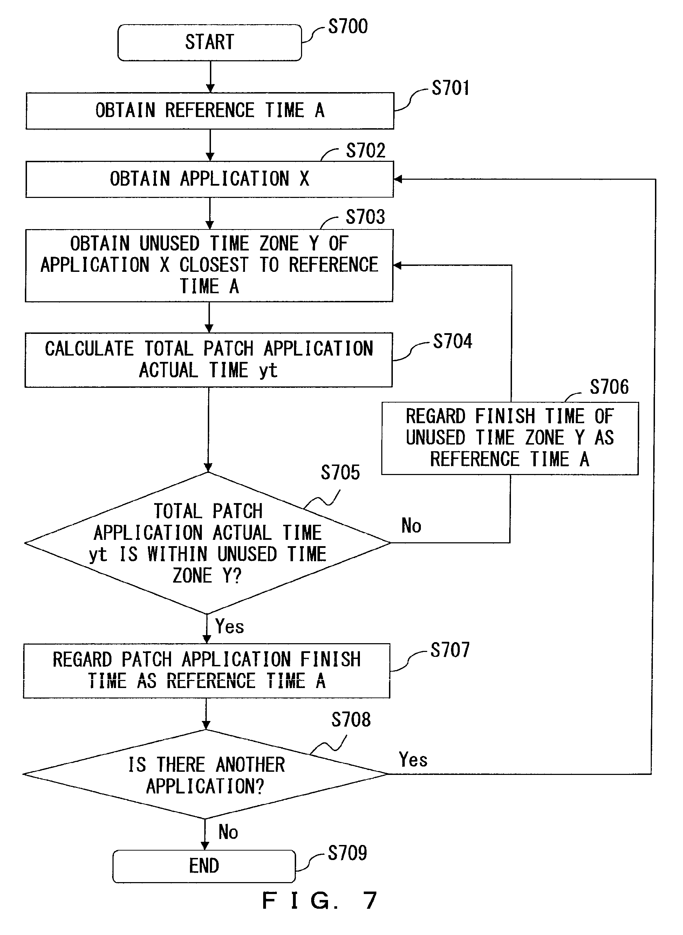

FIG. 7 is a flowchart presenting the generation process of a patch application schedule according to the present embodiment.

When the patch application system 110 moves the process to step S604 presented in FIG. 6, it starts the generation process of the patch application schedule (step S700).

In step S701, the patch application system 110 obtains the current time. This time is assumed as "reference time A".

In step S602, the patch application system 110 refers to the product name in the applicable-patch-during-operation-continuation information. Then, the patch application system 110 obtains one application name of the applications registered in the applicable-patch-during-operation-continuation information. The application name is assumed as "application X".

In step S703, the patch application system 110 obtains the software execution schedule from the software execution schedule storage unit 113. Then, the patch application system 110 obtains the time zone in the software execution schedule in which the application X is not used, that is, the patch applicable time zone that is closest to the reference time A. The obtained time zone is referred to as "unused time zone Y".

In step S704, the patch application system 110 calculates the actual time required for applying a patch (excluding a patch to which the patch application time has already been assigned) to the application X, that is, the patch application actual time $y_2$.

At this time, the patch application system 110 refers to the application time in the applicable-patch-during-operation-continuation information, and obtains the application time of the patch for the application X, from the applicable-patch-during-operation-continuation information.

The patch application system 110 requests the hardware information from the server for maintenance 120. Then, the server for maintenance 120 obtains the hardware information from the hardware information storage unit 122 and performs the notification of it to the patch application system 110. Then, the patch application system 110 obtains the system information of the patch application system 110, such as the type, the CPU type, the memory capacity from a setting file and the like that has been set in advance, and obtains the application prediction coefficient for the obtained system information.

Then, the patch application system 110 calculates the patch application predicted time $y_1$ required for the patch application for application A using the formula (1) described above. Furthermore, the patch application system 110 obtains the CPU stop/run time from the hardware information, and calculates the patch application actual time $y_2$ required for the patch application for application A using the formula (2) described above.

In step S705, the patch application system 110 calculates total patch application actual time $y_t$ being the sum of the patch application actual time $y_2$ for the patches for application A (excluding the patches to which the patch application time has already been assigned), and whether it is within the unused time zone Y is determined.

At this time, for example, the patch application system 110 compares (the total patch application actual time $y_t$ + the start time of the unused time zone Y) and (the FINISH TIME of the unused time zone Y). Then, in the case where "(the FINISH TIME of the unused time zone Y) < (the total patch application actual time $y_t$ + the start time of the unused time zone Y)", the patch application system 110 arbitrarily selects the number of patches with which realizes "(the FINISH TIME of the unused time zone Y) ≥ (the total patch application actual time $y_t$ + the start time of the unused time zone Y) ", and assigns the patch application time of the selected patches to the unused time zone Y.

Specifically, in a schedule table, along with a "SCHEDULE NUMBER" assigned in order to the generated patch application schedule, application X is set in "PRODUCT NAME" of the patch application target; the selected patch is set in "patch" to be applied; the start time of the unused time zone Y is set in "APPLICATION START TIME" that is the start time of the patch application process; and (the total patch application actual time $y_t$ + the start time of the unused time zone Y) is set in "APPLICATION FINISH TIME" that is the finish time of the patch application process.

The table below presents a specific example of a schedule table.

[Table 1]

| SCHEDULE NUMBER | PRODUCT NAME | PATCH | APPLICATION START TIME | APPLICATION FINISH TIME |
|---|---|---|---|---|
| 1 | APPLICATION A | Patch4 | 12/27 10:00 0 SECOND | 12/27 10:01 16 SECONDS |
| 2 | APPLICATION B | Patch5 | 12/27 20:00 0 SECOND | 12/27 20:01 16 SECONDS |
| 3 | APPLICATION C | Patch6 | 12/27 20:01 16 SECONDS | 12/27 20:39 45 SECONDS |

For example, the patch application schedule whose schedule number is 1 applies patches Patch4a, 4b, 4c, ... to application A. Then, the patch application process starts at 10:00 and 0 second of 27 December, and finishes at 10:01 and 16 seconds of 27 December.

When the assignment of the patch application time is completed, the patch application system 110 moves the process to step S706 (S705 No).

Meanwhile, in the case where "(the FINISH TIME of the unused time zone Y) ≥ (the total patch application actual time yt + the start time of the unused time zone Y)",the patch application system 110 assigns the patch application time of all the patches for application A (excluding the patches to which the patch application time has already been assigned) to the unused time zone Y.

In this case also, in the schedule table, along with a "SCHEDULE NUMBER" assigned in order to the generated patch application schedule, application X is set in "PRODUCT NAME" of the patch application target; all the patches for application A set in "patch" to be applied; the start time of the unused time zone Y is set in "APPLICATION START TIME" that is the start time of the patch application process; and (the total patch application actual time yt + the start time of the unused time zone Y) is set in "APPLICATION FINISH TIME" that is the finish time of the patch application process.

When the assignment of the patch application time is completed, the process is moved to step S707 (S705 Yes).

In step S706, the patch application system 110 sets the finish time of the unused time zone Y as the reference time A. Then, the patch application system 110 moves the process to step S703.

In step S707, the patch application system 110 sets the time at which the application process of the patches for application X finishes, that is, (the total patch application actual time yt + the start time of the unused time zone Y) as the reference time A.

In step S708, the patch application system 110 determines whether or not there is any application that is registered in the applicable-patch-during-operation-continuation information and has a patch to be applied to which the patch application time has not been assigned.

If there is an application has a patch to be applied to which the patch application time has not been assigned, the patch application system 110 moves the process to step S703. (S708 Yes). Then, one of applications that has a patch to be applied to which the patch application time has not been assigned is selected, and the selected application is set as application X. Then, the patch application system 110 repeats the processes from step S702 to step S708.

Meanwhile, if there is no application for which a patch application schedule has not been generated, the patch application system 110 moves the process to step S709 (S708 No). Then, the generation process of the patch application schedule is terminated.

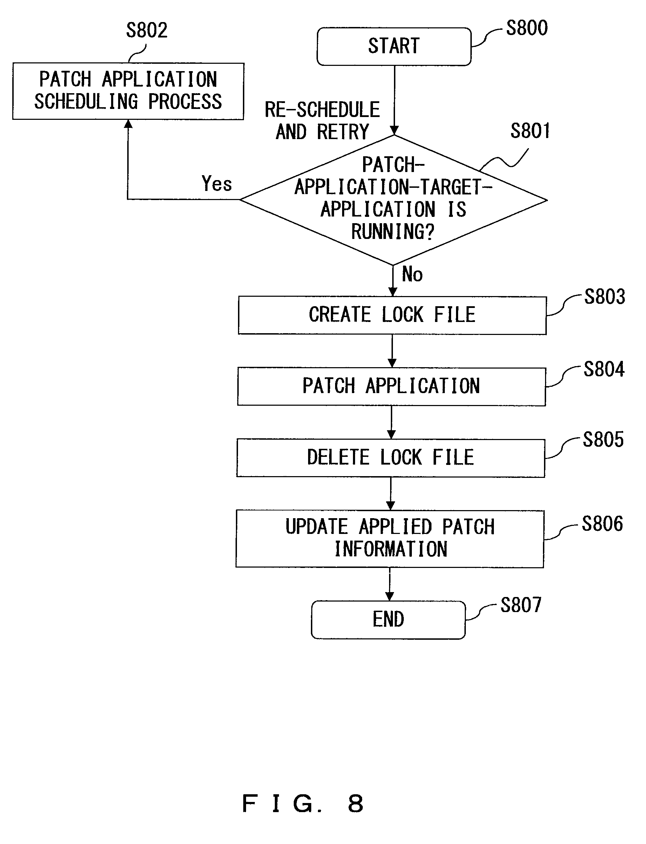

FIG. 8 is a flowchart presenting the patch application process according to the present embodiment.

When the start time of the patch application process defined in the patch application schedule set by the process in step S605 presented in FIG. 6 comes, the patch application system 110 starts the patch application process (step S800). Meanwhile, in the explanation below, the application to be the target of patch application according to the patch application schedule is referred to as the "patch-application-target-application".

In step S801, the patch application system 110 determines whether or not the patch-application-target-application is currently running. When the patch-application-target-application is running, the patch application system 110 moves the process to step S802 (step S801 Yes). Meanwhile, when the patch-application-target-application is not running, the patch application system 110 moves the process to step S803 (step S801 No).

In step S802, the process presented in FIG. 6 is performed, to execute the scheduling process of the patch application schedule again.

In step S803, the patch application system 110 generates a file, at a predetermined location, in which the ID of the patch application process is stated. The generated file is referred to as a "lock file". The generated "lock file" realizes a lock function for a given process by preventing the patch application process corresponding to the ID stated in the "lock file" from running.

In step S804, the patch application system 110 performs the patch application process, to execute the process to apply a patch to the patch-application-target-application.

At this time, the patch application system 110 requests the hardware information from the server for maintenance 120. Then, the server for maintenance 120 obtains hardware information from the hardware information storage unit 122 and performs notification of it to the patch application system 110. Then, the patch application system 110 obtains system information of the patch application system 110, such as the model, CPU type, memory capacity and the like from a setting file and the like that has been set in advance, and obtains the stop/run time corresponding to the obtained system information.

Then, according to the obtained stop/run time, the patch application system 110 repeatedly performs the process to stop the patch application process for a certain time period and execute the patch application process for a certain time period after that, until the application process of the patches for the patch-application-target-application is completed.

In step S805, the patch application system 110 deletes the lock file generated in step S803. The deletion of the "lock file" makes it possible to run the patch application process corresponding to the ID stated in the "lock file".

In step S806, the patch application system 110 registers, in the applied patch information storage unit 111, the patch ID of the patch applied by step S804, the patch ID of a patch related to the patch, the PKG name modified by the patch, and the like, to update the applied patch information.

In addition, the patch application system 110 determines whether or not the application processes of patches planned in the patch application schedule have all been completed. When the application processes of patches planned in the patch application schedule have all been completed, a message stating that the application processes of patches planned in the patch application schedule have all been completed is output to a display device.

When the process described above is completed, the patch application system 110 moves to step S807, and terminates the patch application process.

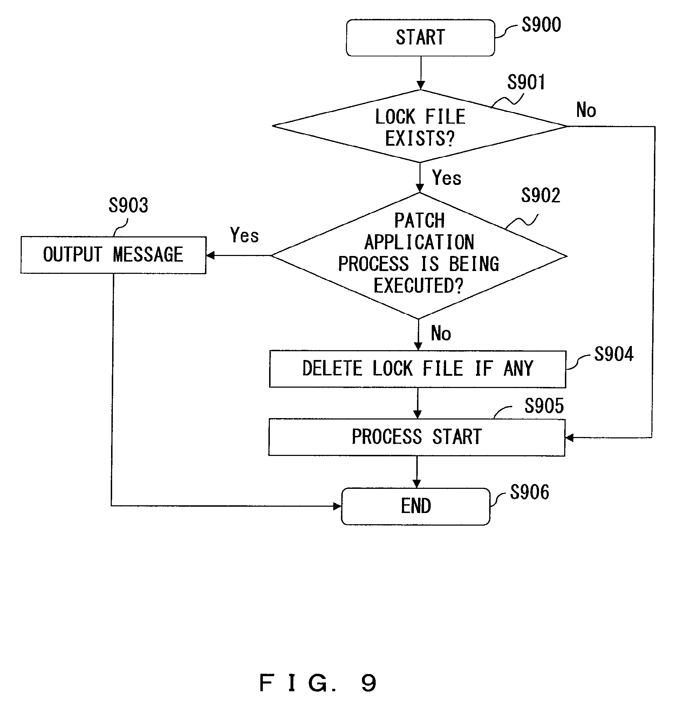

FIG. 9 is a flowchart presenting the process at the time of application start-up according to the present embodiment.

For example, when the user orders the execution of a given application from input means or an order for the execution is given from another application, the application starts a start up process (step S900).

In step S901, the application refers to a predetermined location. Meanwhile, the predetermined location is the location at which the lock file is created in step S803. Then, the application determines whether or not there is a lock file. When there is a lock file, the application moves the process to step S902 (step S901 Yes). Meanwhile, when there is no lock file, the application moves the process to step S906 (step S901, No) .

In step S902, the application reads out the lock file, and obtains the process ID of the patch application process. Then, the application determines whether or not the process of the obtained process ID is running. When the patch application process is running, the application moves the process to step S903 (step S902 Yes). Then, in step S903, the application outputs a message stating that the patch application process is being executed to a display device. Then, the application moves the process to step S906.

Meanwhile, in step S902, when the patch application process is not running, the application moves the process to step S904 (step S902 No). Then, in step S904, the application deletes the lock file.

In step S905, the application starts a predetermined process according to a program instruction. Then, when the predetermined process is completed, the application moves to step S906 to terminate the application.

As explained above, the patch application system 110 extracts the applicable-patch-during-operation-continuation information (step S603) and generates a patch application schedule to apply patches in the extracted applicable-patch-during-operation-continuation information to the patch application system 110 (step S604), and patch application is performed according to the patch application schedule.

Therefore, patches other than the patches that cannot be applied without interrupting the operation continuation are applied while the operation is continued. As a result, it has an effect to reduce the time during which the operation is stopped to apply the patches that cannot be applied without interrupting the operation continuation.

In addition, patches having user asset destruction possibility and incompatibility possibility are excluded from the applicable patch during operation continuation (step S603) , having an effect that application of patches can be performed safely and without affecting the operation while operation is continued.

In addition, at the time of patch application, the application process of patches is performed while repeating a process to stop the patch application process for a certain period of time and to execute the patch application process for a certain period of time after that (step S805), making it possible to perform the application process of patches without putting a load on the system being the patch application target.

In addition, the patch application system 110 obtains information of unapplied patches from the latest patch information to extract patches to be applied (applicable-patches-during-operation-continuation) (steps S602-S603), eliminating the need for the user to sort out patches that are not related to the operation.

**Claims**

1.  A patch application method executing:

    a step of comparing latest patch information indicating software being a patch application target stored in a latest patch information storage unit and applied patch information indicating an applied patch that has already been applied to software stored in an applied patch information storage unit, to specify unapplied patches to the patch application target software, as well as to specify, according to information of installed software stored in an install information storage unit, patches planned to be applied whose application target is installed software, among the unapplied patches to the patch application target software;
    a step of specifying, among the specified patches planned to be applied, parches that do not have at least a user asset destruction possibility being a possibility to destroy user asset or an incompatibility possibility indicating a possibility that incompatibility occurs with other software to which a patch is not applied, as applicable patches;
    a step of reading out, from a software execution schedule storage unit storing an execution schedule for each of the software, the execution schedule to calculate a time zone in which software being an application target of the applicable patches is not executed and generating a patch application schedule to apply the applicable patches to software in the time zone; and

a step of applying the applicable patches to software according to the patch application schedule.

**2.** The patch application process according to claim 1, wherein
in the step of generating the patch application schedule,
a patch application schedule is generated so that patch application times included in the latest patch information storage unit summated for each of the applicable patches are within the time zone in which the software is not executed.

**3.** The patch application process according to claim 2, wherein
in the step of generating a patch application schedule,
in the times to be summated, a stop time of an operation processing apparatus that is held by hardware information used for execution of the software obtained from a hardware information storage unit is also included.

**4.** The patch application process according to claim 1, wherein
in the step of applying the applicable patches to software,
an running status of software being an application target of the applicable patches is checked, and when the software is not running, a patch is applied to the software.

**5.** The patch application process according to claim 1, wherein
in the step of applying the applicable patches to software,
an running status of software being an application target of the applicable patches is checked, and when the software is running, application of a patch to the software is not performed.

**6.** The patch application process according to claim 5, wherein
in the step of generating a patch application schedule,
when software being an application target of the applicable patches is running, a patch application schedule is generated again by the patch application schedule generation process.

**7.** The patch application process according to claim 1, wherein
in the step of applying the applicable patches to software,
application of a patch is performed according to a stop time of a CPU and run time of the CPU obtained from a hardware information storage unit storing hardware information used for execution of the software.

**8.** A patch application method in a patch application program of software installed in an information processing apparatus, executing:

to the information processing apparatus,
a step of comparing latest patch information indicating software being a patch application target stored in a latest patch information storage unit and applied patch information indicating an applied patch that has already been applied to software stored in an applied patch information storage unit, to specify unapplied patches to the patch application target software, as well as to specify, according to information of installed software stored in an install information storage unit, patches planned to be applied whose application target is installed software, among the unapplied patches to the patch application target software;
a step of specifying, among the specified patches planned to be applied, parches that do not have at least a user asset destruction possibility being a possibility to destroy user asset or an incompatibility possibility indicating a possibility that incompatibility occurs with other software to which a patch is not applied, as applicable patches;
a step of reading out, from a software execution schedule storage unit storing an execution schedule for each of the software, the execution schedule to calculate a time zone in which software being an application target of the applicable patches is not executed and generating a patch application schedule to apply the applicable patches to software in the time zone; and
a step of applying the applicable patches to software according to the patch application schedule.

**9.** An information processing apparatus comprising:

a latest patch information storage unit storing latest patch information indicating software being a patch application target;

an applied patch information storage unit storing applied patch information indicating an applied patch that has already been applied to software;

a patch planned to be applied specification unit comparing the latest patch information and the applied patch information to specify unapplied patches to the patch application target software, as well as to specify, according to information of installed software stored in an install information storage unit, patches planned to be applied whose application target is installed software, among the unapplied patches to the patch application target software;

an applicable patch specification unit specifying, among the specified patches planned to be applied, parches that do not have at least a user asset destruction possibility that is a possibility to destroy user asset or an incompatibility possibility that indicates a possibility that incompatibility occurs with other software to which a patch is not applied, as applicable patches;

a patch application schedule generation unit reading out, from a software execution schedule storage unit storing an execution schedule for each of the software, the execution schedule to calculate a time zone in which software being an application target of the applicable patches is not executed

and generating a patch application schedule to apply the applicable patches to software in the time zone; and

a patch application unit applying the applicable patches to software according to the patch application schedule.

F I G. 1

EP 2 336 887 A1

F I G. 2

121

| PATCH ID | PRODUCT NAME | PKG NAME TO BE MODIFIED | PRECAUTIONS | PATCH APPLICATION REFERENCE TIME |
|---|---|---|---|---|
| Patch1 | OS | PkgA | INCOMPATIBILITY POSSIBILITY PRESENT | 30 MINUTES |
| Patch2 | OS | PkgB, pkgC | USER ASSET DESTRUCTION PRESENT | 10 MINUTES |
| Patch3 | DRIVER PRODUCT A | PkgD | NONE | 5 MINUTES |
| Patch4 | APPLICATION A | PkgE | NONE | 1 MINUTE |
| Patch5 | APPLICATION B | PkgF | NONE | 1 MINUTE |
| Patch6 | APPLICATION C | PkgG | NONE | 30 MINUTES |
| Patch7 | APPLICATION A | PkgE | INCOMPATIBILITY POSSIBILITY PRESENT | 3 MINUTES |
| Patch8 | APPLICATION B | PkgF | USER ASSET DESTRUCTION PRESENT | 1 MINUTE |
| Patch9 | APPLICATION C | PkgG | USER ASSET DESTRUCTION PRESENT | 2 MINUTES |
| Patch10 | APPLICATION D | PkgH | NONE | 1 MINUTE |

| PRODUCT NAME | JOB TYPE | PLANNED EXECUTION TIME |
|---|---|---|
| APPLICATION A | REGULAR (EVERYDAY) | 0:00–10:00 |
| APPLICATION B | REGULAR (EVERYDAY) | 10:00–20:00 |
| APPLICATION C | ONE-OFF (12/29) | 22:00–23:00 |
| APPLICATION D | CONSTANTLY USED※ | — |
| ⋮ | ⋮ | ⋮ |

F I G. 3

F I G. 4

14 HOURS

14 HOURS

| ←RUNNING | ▓ | STOPPED | ←RUNNING | STOPPED | ←RUNNING | STOPPED |

12/27 0:00

12/27 10:00

Patch4 APPLICATION

12/28 0:00

12/28 10:00

12/29 0:00

12/29 10:00

14 HOURS

14 HOURS

| STOPPED | ←RUNNING | ▓ | STOPPED | ←RUNNING | STOPPED | ←RUNNING | STOPPED |

12/27 0:00

12/27 10:00

12/27 20:00

Patch5 RUN

12/28 10:00

12/28 20:00

12/29 10:00

12/29 20:00

| STOPPED | ▓ | STOPPED | ←RUNNING |

12/27 0:00

12/27 20:01 16 SECONDS

Patch6 APPLICATION

12/29 22:00

| MODEL | CPU TYPE | MEMORY CAPACITY | CPU STOP/RUN TIME | APPLICATION PREDICTION COEFFICIENT |
|---|---|---|---|---|
| MODEL A | CPUA | 512M | 2, 4 (SECONDS) | 1 |
| MODEL A | CPUB | 640M | 2, 5 (SECONDS) | 1 |
| MODEL B | CPUC | 1024M | 1, 6 (SECONDS) | 1. 1 |

F I G. 5

START — S600

EXTRACT LATEST UNAPPLIED PATCHES INFORMATION — S601

EXTRACT PATCH INFORMATION OF APPLICATION (OTHER THAN OS AND DRIVER) — S602

EXTRACT APPLICABLE-PATCH-DURING-OPERATION-CONTINUATION INFORMATION — S603

GENERATE PATCH APPLICATION SCHEDULE — S604

SETTING SO THAT PATCHES OF EACH APPLICATION ARE APPLIED AT SCHEDULED TIME — S605

PATCH APPLICATION — S606

END — S607

FIG. 6

F I G. 7

S802

PATCH APPLICATION
SCHEDULING PROCESS

START — S800

RE-SCHEDULE
AND RETRY

Yes

PATCH-
APPLICATION-TARGET-
APPLICATION IS
RUNNING? — S801

No

CREATE LOCK FILE — S803

PATCH APPLICATION — S804

DELETE LOCK FILE — S805

UPDATE APPLIED PATCH
INFORMATION — S806

END — S807

F I G. 8

START ⟶ S900

S901
LOCK FILE EXISTS? — No ⟶

Yes

S903
OUTPUT MESSAGE ⟵ Yes — PATCH APPLICATION PROCESS IS BEING EXECUTED? — S902

No

DELETE LOCK FILE IF ANY — S904

PROCESS START — S905

END — S906

F I G. 9

<table>
<tr><td colspan="2" align="center">**INTERNATIONAL SEARCH REPORT**</td><td colspan="2">International application No.<br>PCT/JP2008/002533</td></tr>
</table>

A. CLASSIFICATION OF SUBJECT MATTER
*G06F11/00*(2006.01)i

According to International Patent Classification (IPC) or to both national classification and IPC

B. FIELDS SEARCHED

Minimum documentation searched (classification system followed by classification symbols)
G06F11/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-206260 A  (Aioi Insurance Co., Ltd.), 22 July, 2004 (22.07.04), Par. Nos. [0013], [0035], [0045], [0052] to [0063]; Figs. 1 to 12 | 1-9 |
| Y | JP 2004-127281 A  (Ricoh Co., Ltd.), 22 April, 2004 (22.04.04), Par. Nos. [0006], [0007], [0060] | 1-9 |
| Y | JP 2007-293514 A  (Canon Inc.), 08 November, 2007 (08.11.07), Full text; Figs. 1 to 3 | 1-9 |
| A | JP 2004-127253 A  (Ricoh Co., Ltd.), 22 April, 2004 (22.04.04), Full text; Figs. 1 to 14 | 1-9 |

☐ Further documents are listed in the continuation of Box C.        ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
04 November, 2008 (04.11.08)

Date of mailing of the international search report
18 November, 2008 (18.11.08)

Name and mailing address of the ISA/
Japanese Patent Office

Authorized officer

Facsimile No.

Telephone No.

Form PCT/ISA/210 (second sheet) (April 2007)

<table>
<tr><td colspan="2" align="center">**INTERNATIONAL SEARCH REPORT**<br>Information on patent family members</td><td>International application No.<br>*PCT/JP2008/002533*</td></tr>
</table>

```
    JP 2004-206260 A        2004.07.22       (Family: none)

    JP 2004-127281 A        2004.04.22       US 2004-109188 A1
                                             US 2004-055625 A1
                                             US 2008-066084 A
                                             US 2008-098389 A
                                             EP 1398948 A2
                                             CN 1495580 A

    JP 2007-293514 A        2007.11.08       (Family: none)

    JP 2004-127253 A        2004.04.22       JP 2004-129220 A
                                             US 2004-075857 A1
                                             EP 1387268 A2
                                             CN 1495579 A
```

Form PCT/ISA/210 (patent family annex) (April 2007)

**REFERENCES CITED IN THE DESCRIPTION**

**Patent documents cited in the description**

- JP H01220031 B
- JP 2003015894 A
- JP 2004206390 A